# FASCICULE DE BREVET EUROPEEN

(11) **EP 0 564 308 B1**
(45) Date de publication et mention de la délivrance du brevet: **13.11.1996**
(21) Numéro de dépôt: 93400124.9
(22) Date de dépôt: 19.01.1993
(51) Int. Cl.: G01N 29/22, G01N 29/26

(54) **Dispositif de mesure automatique des contraintes résiduelles dans la jante d'une roue d'un essieu monté de chemin de fer**
Vorrichtung zur automatischen Bestimmung der Restspannung in einer Felge eines Radsatzes für Schienen, bzw. Gleisfahrzeuge
Device for automatically measuring residual stresses in the wheel rim of a wheel set for railway-use

(30) Priorité: 30.03.1992 FR 9203817
(43) Date de publication de la demande: 06.10.1993
(73) Titulaire: VALDUNES, F-92800 Puteaux (FR)
(72) Inventeur: Catot, Bernard, F-59495 Leffrinckoucke (FR); Del Fabro, Valério, F-59770 Marly (FR); Stevenot Guy, F-59220 Denain (FR)
(74) Mandataire: Bouget, Lucien

(56) Documents cités:
- WO-A-90/13814
- US-A- 3 505 859

## Description

L'invention concerne le contrôle des contraintes résiduelles des roues équipant des essieux montés de chemin de fer.

A des intervalles de temps réguliers, on fait subir aux roues équipant des essieux montés de chemin de fer des contrôles qui consistent notamment à mesurer les contraintes résiduelles dans les jantes.

Pour celà, on meule localement la surface des jantes. On applique, sur la surface meulée, un palpeur à ultrasons à onde de cisaillement orienté dans une première direction puis orienté dans une direction perpendiculaire, on mesure l'épaisseur de la jante et on détermine l'écart de vitesse des ondes ultrasonores entre les deux orientations perpendiculaires.

Toutes ces opérations sont faites manuellement et sont relativement lentes, ce qui est un inconvénient lorsqu'il y a un nombre important de roues à contrôler.

Le but de la présente invention est de remédier à cet inconvénient en proposant un moyen automatique pour effectuer les contrôles des jantes de roues de chemin de fer.

A cet effet, l'invention a pour objet un dispositif de mesure automatique des contraintes résiduelles dans la jante d'une roue d'un essieu monté de chemin de fer comportant deux roues reposant chacune sur un rail, caractérisé en ce qu'il comprend :
- le rail de support de la roue,
- des moyens de support et de levage reposant sur une surface sensiblement horizontale située à un niveau inférieur au rail et disposés sensiblement à l'aplomb du rail,
- un châssis monté sur les moyens de support et de levage, de manière à être réglable en hauteur,
- deux jeux de glissières fixées sur le châssis, dans une direction parallèle au rail, disposés de part et d'autre du rail,
- deux chariots montés mobiles en translation sur les glissières,
- des moyens de déplacement des chariots,
- deux dispositifs de meulage, portés chacun par un chariot et montés mobiles sur le chariot, dans une direction perpendiculaire aux glissières,
- des moyens de déplacement des dispositifs de meulage,
- un dispositif de contrôle par ultrasons monté mobile en translation sur l'un des deux chariots, dans une direction perpendiculaire aux glissières, comportant une tête émettrice-réceptrice d'ondes ultrasonores de cisaillement montée rotative autour d'un axe horizontal parallèle à l'axe de déplacement du dispositif de contrôle par ultrasons, un moyen de mise en rotation de la tête émettrice et réceptrice et un moyen de distribution de fluide de couplage,
- des moyens de déplacement du dispositif de contrôle par ultrasons, entre une position de service en contact avec la jante de la roue et une position de retrait,
- deux détecteurs de position de type mécanique, montés mobiles chacun sur un chariot, dans une direction perpendiculaire aux glissières et des moyens de déplacement des détecteurs entre une position effacée et une position en appui contre la jante de la roue, les deux détecteurs se trouvant en vis-à-vis de part et d'autre de la roue.

De préférence, les moyens de support et de levage du châssis sont des vérins à vis synchronisés entre eux et les moyens et dispositifs de déplacement en translation des chariots, des dispositifs de meulage, du dispositif de contrôle par ultrasons et des détecteurs de position mécaniques sont des vérins pneumatiques.

De préférence, le moyen de mise en rotation de la tête émettrice-réceptrice est un vérin pneumatique quart de tour et le moyen de distribution du fluide de couplage est une pompe doseuse prolongée par un tube débouchant au droit de la tête émettrice-réceptrice.

Le dispositif comporte en outre des moyens électropneumatiques et électroniques de commande. De préférence, le moyen électronique de commande est un microprocesseur.

Le rail qui se situe au-dessus du dispositif comporte, au droit du dispositif, une entaille en V sur sa partie supérieure.

Ce dispositif permet de réaliser automatiquement et rapidement le contrôle de contraintes résiduelles dans la jante d'une roue d'un essieu monté de chemin de fer.

L'invention va maintenant être décrite plus en détail en regard des figures annexées dans lesquelles :
- la figure 1 est une vue en élévation du dispositif selon l'invention,
- la figure 2 est une vue de dessus.

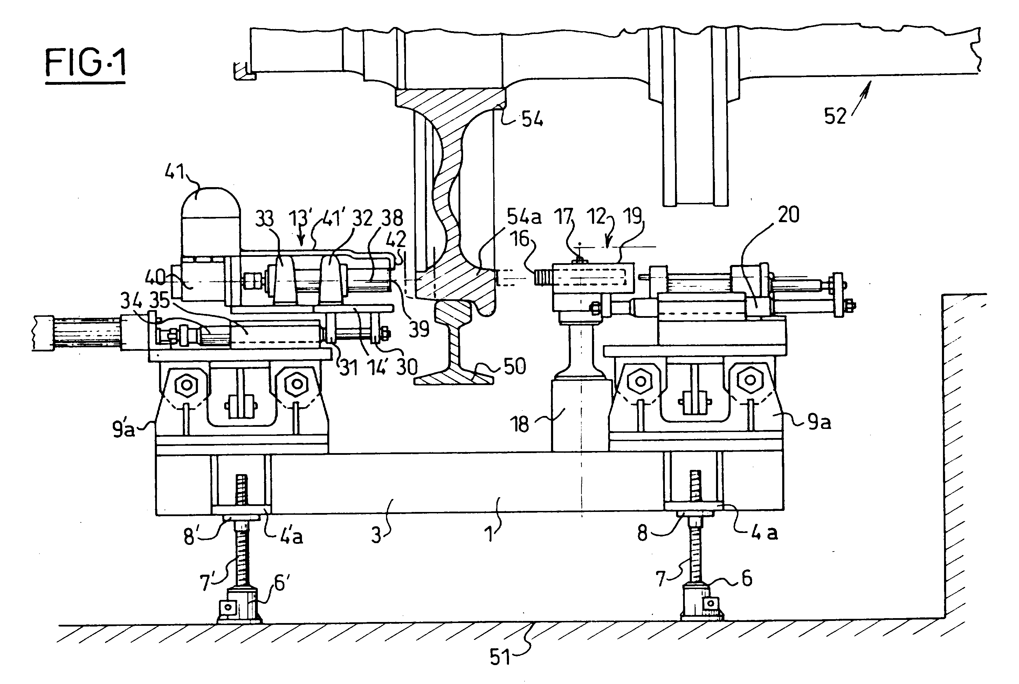

Le dispositif selon l'invention comporte un châssis 1 rectangulaire constitué de deux poutres longitudinales 2, 2' et de deux poutres transversales 3, 3'. Les poutres longitudinales 2 et 2' s'étendent au-delà des poutres transversales 3 et 3', pour former des supports 4a, 4b, 4'a, 4'b percés de trous 5a, 5b, 5'a, 5'b. Le châssis 1 est posé sur quatre vérins à vis 6, 6' (deux seulement sont visibles sur la figure 1) dont les vis 7, 7' passent pas les trous 5a, 5b, 5'a, 5'b.

Par l'intermédiaire des supports 4a, 4b, 4'a, 4'b, le châssis 1 repose sur les écrous 8, 8' des vérins à vis. Ces écrous sont fixés par des vis non représentées aux supports 4a, 4b, 4'a, 4'b.

Les vis du vérin à vis peuvent être mises en rotation par des moteurs non représentés munis d'un dispositif de commande. Ils sont synchronisés entre eux. Chaque poutre longitudinale 2, 2' porte deux glissières 8a, 8b, 8'a, 8'b parallèles aux poutres et maintenues par des supports 9a, 9b, 9'a, 9'b fixés par des vis non représentées sur les poutres longitudinales. Les glissières s'étendent sensiblement sur toute la longueur de l'espace entre les poutres transversales.

Chaque série de glissières 8a, 8b et 8'a, 8'b porte un chariot coulissant 10, 10'. Pour chaque ensemble chariot-glissière, un vérin pneumatique 11, 11' fixé d'une part sur le châssis, d'autre part aux chariots, assure le déplacement en translation du chariot correspondant.

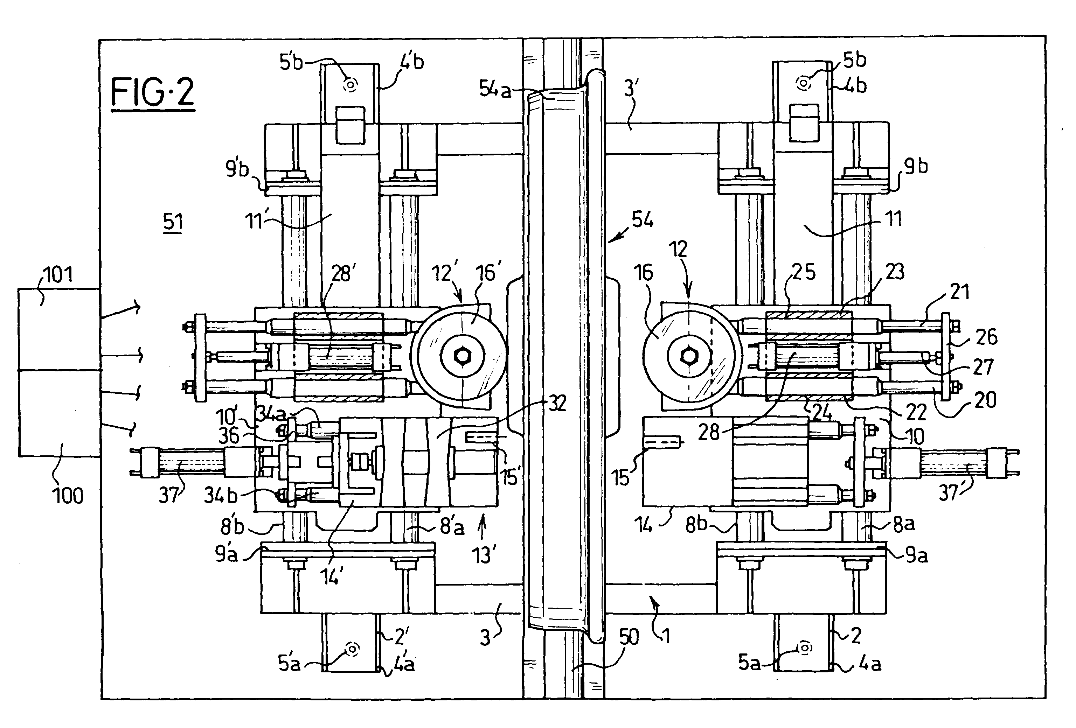

Le chariot situé à gauche sur la figure 2 porte un dispositif de meulage 12' monté coulissant et un ensemble de contrôle par ultrason 13' monté sur un support coulissant 14' ; le dispositif de meulage et le support coulissant sont montés mobiles en translation dans une direction perpendiculaire à la direction des glissières 8'a, 8'b.

Le chariot situé à droite sur la figure 2 porte un dispositif de meulage 12 identique à l'ensemble de meulage 12' mais disposé symétriquement par rapport au plan médian de la machine parallèle aux glissières 8a, 8b, 8'a, 8'b. Ce chariot porte également un support coulissant 14 identique au support 14' mais disposé symétriquement par rapport à l'axe de la machine.

Les supports 14 et 14' portent des détecteurs de position constitués par des palpeurs mécaniques 15 et 15' dont la position est repérée par des règles optiques dont les signaux peuvent être envoyés à un microprocesseur.

Les deux dispositifs de meulage étant identiques on n'en décrira qu'un seul, l'ensemble de droite.

Le dispositif de meulage 12 comporte une meule 16 en forme de disque montée rotative autour d'un axe 17 entraîné par un moteur 18. La meule 16 est partiellement entourée par un capot 19. L'ensemble moteur est fixé sur deux tiges 20 et 21 montées coulissantes dans le chariot 10.

Le chariot 10 comporte deux parties en saillie 22 et 23 percées de trous 24 et 25 dans lesquels coulissent les tiges 20 et 21. Ces tiges coulissent dans une direction perpendiculaire aux glissières 8a, 8b et parallèlement au plan d'appui du châssis.

Du côté opposé à la meule 16, les tiges 20 et 21 sont reliées par une traverse 26 à laquelle est fixée l'extrémité de la tige 27 d'un vérin pneumatique 28 fixé sur le chariot 10.

Les supports 14 et 14' sont identiques. On ne décrira que le support 14' et son montage, ce support 14' portant le dispositif de contrôle par ultrasons.

Le support 14' est une plaque rectangulaire munie à sa partie inférieure de quatre pattes 30, 31 (deux seulement visibles) et à sa partie supérieure de deux paliers 32, 33. Deux tiges 34a et 34b sont fixées aux pattes 30 et 31 et coulissent dans des parties en saillie 35 (une seule visible) du plateau 10'. Les tiges 34a, 34b sont reliées à une de leurs extrémités par une traverse 36 à un vérin pneumatique 37. Le corps de ce vérin est fixé sur le plateau 10' et permet d'assurer une translation du support 14' perpendiculairement à la direction des glissières 8'a, 8'b.

Un dispositif de contrôle par ultrasons à ondes de cisaillement 38 de forme cylindrique est engagé dans les paliers 32 et 33 de façon à pouvoir tourner sur lui-même autour de son axe. Ce dispositif possède à une de ses extrémités une tête active 39 émettrice-réceptrice d'ondes ultrasonores de cisaillement. L'autre extrémité est reliée à un vérin pneumatique quart de tour 40. Au-dessus du vérin est placée une pompe doseuse 41 dont le refoulement est prolongé par un tube 41' dont l'extrémité 42 débouche à proximité de la tête active 39.

Les meules, la tête active du dispositif de contrôle par ultrason et les palpeurs mécaniques sont placés tous dans un même plan parallèle au plan du châssis 1.

L'ensemble des vérins et des moyens de mesure sont reliés à des dispositifs électropneumatiques 100 et électroniques 101 qui permettent d'effectuer tous les mouvements automatiquement.

Le dispositif décrit repose par l'intermédiaire des vérins à vis 6, 6' sur une surface horizontale 51 sous un rail 50 d'une voie de chemin de fer. Ce rail 50 comporte une encoche en V. Le rail 50 est dans l'axe de la machine et parallèle aux glissières 8a, 8b, 8'a, 8'b. L'encoche du rail est à peu près au milieu du dispositif.

Pour faire un contrôle, on procède comme suit :
- En le faisant rouler sur la voie ferrée, on amène un essieu monté 52 et on l'arrête lorsqu'une des roues 54 est dans l'entaille en V, ainsi l'essieu monté est positionné par rapport à la machine ;
- A l'aide des vérins à vis 6, 6' on ajuste la hauteur du châssis 1 pour que les meules, le dispositif de contrôle par ultrasons et les palpeurs mécaniques soient à la hauteur de la jante 54a de la roue 54.
- A l'aide des vérins 11 et 11' on amène les meules 16, 16' en face de la jante de la roue.
- A l'aide des vérins 28, 28' on applique les meules 16, 16' qui sont en rotation sur la jante 54a de la roue 54 et, simultanément, à l'aide des vérins 11 et 11', on fait effectuer aux meules un léger mouvement de va et vient, puis on écarte les meules de la jante.
- A l'aide des vérins 11 et 11' on amène les palpeurs 15, 15' en face de la zone meulée de la jante et avec les vérins 37 et 37' on applique les palpeurs contre la jante ; on mesure la position des palpeurs, ce qui permet de déterminer l'épaisseur de la jante qu'on enregistre ; puis on écarte les palpeurs.
- A l'aide des vérins 11 et 11' on amène la tête de contrôle à ultrasons 39 en face de la zone meulée, à l'aide de la pompe doseuse 41, on envoie un peu de liquide de couplage, puis, à l'aide du vérin 37, on applique la tête de contrôle sur la jante et on fait une première mesure de temps de propagation des ultrasons dont on enregistre le résultat, puis à l'aide du vérin pneumatique quart de tour 40, on fait faire un quart de tour au dispositif de contrôle puis on fait une deuxième mesure dont on enregistre le résultat, on écarte alors le dispositif de mesure à ultrasons de la jante de la roue.

Le principe du contrôle consiste à déterminer la vitesse de propagation des ondes ultrasonores dans l'épaisseur de la jante et dans deux directions de vibration perpendiculaires entre elles, ce qui permet par comparaison de déterminer l'amplitude des contraintes résiduelles.

Le lecteur comprendra que le dispositif qui vient d'être décrit peut être réalisé par des moyens équivalents en particulier pour le guidage et pour les mouvements des différents éléments mobiles.

Le positionnement en hauteur du châssis peut être réalisé automatiquement en utilisant un détecteur par exemple inductif disposé par exemple sur le support 14.

## Revendications

1. Dispositif de mesure automatique des contraintes résiduelles dans la jante (54a) d'une roue (54) d'un essieu monté (52) de chemin de fer comportant deux roues reposant chacune sur un rail (50), caractérisé en ce qu'il comprend :
- le rail (50) de support de la roue (54),
- des moyens de support et de levage (6, 6') reposant sur une surface (51) sensiblement horizontale située à un niveau inférieur au rail et disposés sensiblement à l'aplomb du rail (50),
- un châssis (1) monté sur les moyens de support et de levage (6, 6'), de manière à être réglable en hauteur,
- deux jeux de glissières (8a, 8b, 8'a, 8'b) fixées sur le châssis (1), dans une direction parallèle au rail (50), disposés de part et d'autre du rail (50),
- deux chariots (10, 10') montés mobiles en translation sur les glissières (8a, 8b, 8'a, 8'b),
- des moyens de déplacement (11, 11') des chariots (12, 12'),
- deux dispositifs de meulage (12, 12'), portés chacun par un chariot (10, 10') et montés mobiles sur le chariot, dans une direction perpendiculaire aux glissières (8a, 8b, 8'a, 8'b),
- des moyens de déplacement (28, 28') des dispositifs de meulage (12, 12'),
- un dispositif de contrôle par ultrasons (13') monté mobile en translation sur l'un des deux chariots (10'), dans une direction perpendiculaire aux glissières (8a, 8b, 8'a, 8'b), comportant une tête émettrice-réceptrice (39) d'ondes ultrasonores de cisaillement montée rotative autour d'un axe horizontal parallèle à l'axe de déplacement du dispositif de contrôle par ultrasons (13'), un moyen de mise en rotation (40) de la tête émettrice et réceptrice (39) et un moyen de distribution de fluide de couplage (41),
- des moyens de déplacement (37) du dispositif de contrôle par ultrasons (13'), entre une position de service en contact avec la jante (54a) de la roue (54) et une position de retrait,
- deux détecteurs de position (15, 15') de type mécanique, montés mobiles chacun sur un chariot (10, 10'), dans une direction perpendiculaire aux glissières (8a, 8b, 8'a, 8'b) et des moyens de déplacement (37) des détecteurs (15, 15') entre une position effacée et une position en appui contre la jante (54a) de la roue (54), les deux détecteurs (15, 15') se trouvant en vis-à-vis de part et d'autre de la roue (54).

2. Dispositif selon la revendication 1, caractérisé en ce que les dispositifs de support et de levage (6, 6') du châssis (1) sont des vérins à vis synchronisés entre eux.

3. Dispositif selon la revendication 1, caractérisé en ce que les moyens de déplacement (11, 11', 28, 28', 37) en translation des chariots (10, 10'), des dispositifs de meulage (12, 12'), du dispositif de contrôle par ultrasons (13') et des détecteurs mécaniques (15, 15') sont des vérins pneumatiques.

4. Dispositif selon l'une quelconque des revendications 1 à 3, caractérisé en ce que le moyen (40) de mise en rotation de la tête émettrice-réceptrice (39) est un vérin pneumatique quart de tour.

5. Dispositif selon l'une quelconque des revendications 1 à 4, caractérisé en ce que le moyen de distribution de fluide de couplage (41) est une pompe doseuse prolongée par un tube débouchant au droit de la tête émettrice-réceptrice (39).

6. Dispositif selon l'une quelconque des revendications 1 à 5, caractérisé en ce qu'il comporte en outre des moyens électropneumatiques (100) et électroniques de commande (101).

7. Dispositif selon la revendication 6, caractérisé en ce qu'un moyen électronique de commande (101) est un microprocesseur.

8. Dispositif selon l'une quelconque des revendications 1 à 7, caractérisé en ce que le rail (50) comporte sur sa partie supérieure une entaille en V d'arrêt de la roue (54) en position de mesure et de contrôle.

## Patentansprüche

1. Vorrichtung zum automatischen Messen der Restspannungen in der Felge (54a) eines Rades (54) eines Radsatzes für Schienenfahrzeuge, der zwei jeweils auf einer Schiene (50) aufliegende Räder besitzt, dadurch gekennzeichnet, daß sie folgendes aufweist:
- die das Rad (54) tragende Schiene (50),
- Trag- und Hebeeinrichtungen (6, 6'), die auf einer ungefähr horizontalen, tiefer als die Schiene gelegenen Fläche (51) aufliegen und ungefähr senkrecht unter der Schiene (50) angeordnet sind,
- einen Rahmen (1), der auf den Trag- und Hebeeinrichtungen (6, 6') angeordnet und dadurch höhenverstellbar ist,
- zwei zu beiden Seiten der Schiene (50) angeordnete Sätze von Gleitführungen (8a, 8b, 8'a, 8'b), die auf dem Rahmen (1) in einer zur Schiene (50) parallelen Richtung befestigt sind,
- zwei auf den Gleitführungen (8a, 8b, 8'a, 8'b) geradlinig beweglich angeordnete Wagen (10, 10'),
- Einrichtungen (11, 11') zum Bewegen der Wagen (12, 12'),
- zwei Schleifvorrichtungen (12, 12'), die jeweils von einem Wagen (10, 10') getragen sind und auf diesem in einer zu den Gleitführungen (8a, 8b, 8'a, 8'b) senkrechten Richtung beweglich angeordnet sind,
- Einrichtungen (28, 28') zum Bewegen der Schleifvorrichtungen (12, 12'),
- eine Ultraschall-Prüfvorrichtung (13'), die auf einem der beiden Wagen (10') in einer zu den Gleitführungen (8a, 8b, 8'a, 8'b) senkrechten Richtung geradlinig beweglich angeordnet ist und einen Sende- und Empfangskopf (39) für Ultraschall-Transversalwellen, der um eine zur Bewegungsachse der Ultraschall-Prüfvorrichtung (13') parallele horizontale Achse drehbar ist, eine Einrichtung (40) zum Drehen des Sende- und Empfangskopfs (39) und eine Einrichtung (41) zur Kopplungsfluidabgabe aufweist,
- Einrichtungen (37) zum Bewegen der Ultraschall-Prüfvorrichtung (13') zwischen einer Betriebsstellung, in der sie mit der Felge (54a) des Rads (54) in Kontakt ist, und einer weggerückten Stellung,
- zwei mechanische Positionsdetektoren (15, 15'), die jeweils auf einem Wagen (10, 10') in einer zu den Gleitführungen (8a, 8b, 8'a, 8'b) senkrechten Richtung beweglich angeordnet sind, und Einrichtungen (37) zum Bewegen der Detektoren (15, 15') zwischen einer eingefahrenen Stellung und einer Stellung, in der sie an die Felge (54a) des Rads (54) angedrückt sind, wobei die beiden Fühler (15, 15') zu beiden Seiten des Rads (54) einander gegenüberstehen.

2. Vorrichtung nach Anspruch 1, dadurch gekennzeichnet, daß die Trag- und Hebevorrichtungen (6, 6') des Rahmens (1) miteinander synchronisierte Schraubenspindeln sind.

3. Vorrichtung nach Anspruch 1, dadurch gekennzeichnet, daß die Einrichtungen (11, 11', 28, 28', 37) zum geradlinigen Bewegen der Wagen (10, 10'), der Schleifvorrichtungen (12, 12'), der Ultraschall-Prüfvorrichtung (13') und der mechanischen Detektoren (15, 15') Pneumatikzylinder sind.

4. Vorrichtung nach einem der Ansprüche 1 bis 3, dadurch gekennzeichnet, daß die Einrichtung (40) zum Drehen des Sende- und Empfangskopfs (39) ein eine Vierteldrehung ausführendes pneumatisches Antriebsorgan ist.

5. Vorrichtung nach einem der Ansprüche 1 bis 4, dadurch gekennzeichnet, daß die Einrichtung (41) zur Kopplungsfluidabgabe eine Dosierpumpe ist, die durch ein Rohr verlängert ist, das auf Höhe des Sende- und Empfangskopfs (39) ausmündet.

6. Vorrichtung nach einem der Ansprüche 1 bis 5, dadurch gekennzeichnet, daß sie außerdem elektropneumatische (100) und elektronische (101) Steuereinrichtungen aufweist.

7. Vorrichtung nach Anspruch 6, dadurch gekennzeichnet, daß eine elektronische Steuereinrichtung (101) ein Mikroprozessor ist.

8. Vorrichtung nach einem der Ansprüche 1 bis 7, dadurch gekennzeichnet, daß die Schiene (50) in ihrem oberen Bereich einen V-förmigen Einschnitt zur Blockierung des Rads (54) in Mess- und Prüfstellung aufweist.

## Claims

1. Device for automatically measuring the residual stresses in the rim (54a) of a wheel (54) of a wheelset (52) for railways, including two wheels which each rest on a rail (50), characterised in that it comprises:
- the rail (50) for supporting the wheel (54),
- supporting and lifting means (6, 6') which rest on a substantially horizontal surface (51) situated at a lower level than the rail and are arranged substantially plumb with the rail (50),
- a frame (1) mounted on the supporting and lifting means (6, 6') so as to be adjustable in height,
- two sets of slides (8a, 8b, 8'a, 8'b) fixed on the frame (1) in a direction parallel to the rail (50), which sets are arranged on either side of the rail (50),
- two carriages (10, 10') mounted so as to be translationally movable on the slides (8a, 8b, 8'a, 8'b),
- means (11, 11') for displacing the carriages (10, 10'),
- two grinding devices (12, 12'), each carried by one carriage (10, 10') and mounted so as to be movable on the carriage in a direction perpendicular to the slides (8a, 8b, 8'a, 8'b),
- means (28, 28') for displacing the grinding devices (12, 12'),
- an ultrasonic checking device (13') mounted so as to be translationally movable on one of the two carriages (10') in a direction perpendicular to the slides (8a, 8b, 8'a, 8'b), including a head (39) for transmitting and receiving ultrasonic shear waves which is mounted so as to be rotatable about a horizontal axis parallel to the displacement axis of the ultrasonic checking device (13'), a means (40) for setting the transmitting and receiving head (39) in rotation and a means (41) for delivering coupling fluid,
- means (37) for displacing the ultrasonic checking device (13') between a service position in contact with the rim (54a) of the wheel (54) and a drawn-back position,
- two mechanical-type position detectors (15, 15'), each mounted so as to be movable on one carriage (10, 10') in a direction perpendicular to the slides (8a, 8b, 8'a, 8'b), and means (37) for displacing the detectors (15, 15') between a set-back position and a position bearing against the rim (54a) of the wheel (54), the two detectors (15, 15') being located opposite each other on either side of the wheel (54).

2. Device according to Claim 1, characterised in that the supporting and lifting devices (6, 6') for the frame (1) are screw jacks which are synchronised with one another.

3. Device according to Claim 1, characterised in that the means (11, 11', 28, 28', 37) for translationally displacing the carriages (10, 10'), of the grinding devices (12, 12'), of the ultrasonic checking device (13') and of the mechanical detectors (15, 15') are pneumatic cylinders.

4. Device according to any one of Claims 1 to 3, characterised in that the means (40) for setting the transmitting and receiving head (39) in rotation is a quarter-turn pneumatic cylinder.

5. Device according to any one of Claims 1 to 4, characterised in that the means (41) for delivering coupling fluid (41) is a metering pump extended by a tube which opens out at the level of the transmitting and receiving head (39).

6. Device according to any one of Claims 1 to 5, characterised in that it additionally includes electropneumatic (100) and electronic control (101) means.

7. Device according to Claim 6, characterised in that an electronic control means (101) is a microprocessor.

8. Device according to any one of Claims 1 to 7, characterised in that the rail (50) includes on its upper part a V-shaped groove for arresting the wheel (54) in the measuring and checking position.
